# FASCICULE DE BREVET EUROPEEN

(11) **EP 2 825 514 B1**
(45) Date de publication et mention de la délivrance du brevet: **13.04.2016**
(21) Numéro de dépôt: 13706607.2
(22) Date de dépôt: 31.01.2013
(51) Int. Cl.: B01J 19/00, F16J 15/10, F16L 25/00, C04B 37/02, F16L 49/02

(54) **JOINT CERAMIQUE/METAL ET SON PROCEDE D'ELABORATION**
NEUARTIGE KERAMIK-METALL-DICHTUNG UND HERSTELLUNGSVERFAHREN DAFÜR
NOVEL CERAMIC-TO-METAL SEAL, AND METHOD FOR PRODUCING SAME

(30) Priorité: 12.03.2012 FR 1252181
(43) Date de publication de la demande: 21.01.2015
(73) Titulaire: L'Air Liquide Société Anonyme pour l'Etude et l'Exploitation des Procédés Georges Claude, 75007 Paris (FR)
(72) Inventeur: LEBAIN, Gilles, F-94320 Thiais (FR); RICHET, Nicolas, F-78330 Fontenay Le Fleury (FR)
(74) Mandataire: Beroud, Amandine
(86) Numéro de dépôt international: PCT/FR2013/050204
(87) Numéro de publication internationale: WO 2013/135982

(56) Documents cités:
- EP-A1- 1 783 107
- US-A- 3 920 172
- US-A- 5 264 295

## Description

L'invention se rapporte au domaine des jonctions céramique-métal et plus précisément à la jonction entre une céramique et un métal ou un alliage métallique, assurant l'étanchéité au gaz pendant la plus longue durée possible, sous atmosphère oxydante d'un côté et réductrice de l'autre, ou sous atmosphère neutre d'un côté et vide de l'autre, avec une différence de pressions entre les deux atmosphères comprise entre 0 et 30 bars. Les atmosphères sont susceptibles de contenir de la vapeur d'eau et l'ensemble doit travailler dans une gamme de température comprise entre 20°C et 1000°C. Ces contraintes imposent la mise en oeuvre de matériaux inertes chimiquement les uns par rapport aux autres et possédant des propriétés physiques adaptées.

Les applications visées sont les réacteurs à base de membrane céramique pour la production ou la séparation de gaz, en particulier le CMR (réacteur catalytique membranaire) pour la production de gaz de synthèse.

Deux principales approches ont déjà été étudiées.

La première approche consiste à mettre en compression un matériau déformable qui vient se plaquer sur le métal d'un côté et sur la céramique de l'autre. Le joint subit des efforts de compression qui lui permettent d'assurer un bon contact au niveau des interfaces et l'étanchéité (documents US6547286 et EP1067320). Un point important est de limiter les contraintes appliquées sur le tube céramique pour éviter son endommagement. Dans la plupart des cas, une phase fluide est nécessaire pour parfaire l'étanchéité aux gaz, de la jonction, en particulier si les états de surface des pièces sont très irréguliers. Une jonction céramique/métal constituée d'un empilement de mica et de verre a été développée : Chou Y-S., Stevenson J.W. Thermal cycling and dégradation mechanisms of compressive mica-based seals for solid oxide fuel cells. 2002, J. of Power Sources, vol 112, p376-383. Cependant, la différence de coefficients de dilatation thermique est importante entre le mica (6,9.10-6/°C) et les alliages choisis (inconel 600 = 19.10-6/°C, SS430 = 12,5.10-6/°C), ce qui conduit à une augmentation rapide des fuites lors de cycles thermiques plus ou moins rapides entre 100°C et 800°C, malgré la bonne étanchéité apporté par le verre. En l'absence de verre, une compression importante du matériau déformable est nécessaire à l'obtention d'une bonne étanchéité.

Une autre solution est d'enrouler une fibre autour du tube céramique et d'assurer une compression entre la fibre et le support métallique. Une phase fluide peut également être ajoutée pour parfaire l'étanchéité au gaz de la jonction. Ce type de liaison nécessite d'avoir une adaptation parfaite des coefficients de dilatation thermique du support et du tube car le contact est intime entre les deux pièces et les déformations du métal très faibles avec les designs proposés. Des cycles thermiques répétés ou des chocs thermiques (variation rapide de température) ou chimiques (variation rapide de la teneur en oxygène de l'atmosphère) pourraient conduire à la fissuration du tube. De plus, ce design nécessite de réaliser des tubes dont l'extrémité ouverte est conique, ce qui impose de les élaborer par pressage. D'autres designs de support métallique, utilisables avec des tubes droits ont été développés mais ils imposent des contraintes radiales sur la céramique pour assurer l'étanchéité et là encore, les coefficients de dilatation thermiques des éléments de la jonction doivent être parfaitement adaptés (US6454274, US6139810).

Un autre ensemble de joint d'étanchéité pour un tube creux en céramique est connu de EP 1 783 107 A1. Dans le cas des membranes céramiques, il faut également considérer l'expansion dite chimique liée à la modification de concentration en lacunes d'oxygène dans la céramique en fonction de l'atmosphère. Ces changements dimensionnels sont les plus critiques pour l'opération des réacteurs à membranes céramiques

Dès lors, un problème qui se pose est de fournir un meilleur ensemble de joint céramique/métal pour des membranes tubulaires céramiques.

Une solution de la présente invention est un ensemble de joint d'étanchéité qui comprend :
(a) un tube céramique 1
(b) une première bague 2 en alliage réfractaire comprenant :
   - une ouverture cylindrique 21 permettant de recevoir le tube céramique ;
   - un premier épaulement 22 situé à l'extrémité inférieur de la bague, orienté vers l'intérieur de l'ouverture cylindrique et permettant de supporter ledit tube céramique
   - un deuxième épaulement 23 formant un espace annulaire, à l'extrémité supérieure de la bague, entre le tube céramique et la première bague en alliage réfractaire ;
(c) une deuxième bague 3 en un matériau de scellement déformable par traitement thermique située dans l'espace annulaire formé par le deuxième épaulement de la bague en alliage réfractaire ; et
(d) une troisième bague 4 en alliage métallique posée sur le bord supérieur de la première bague 2.

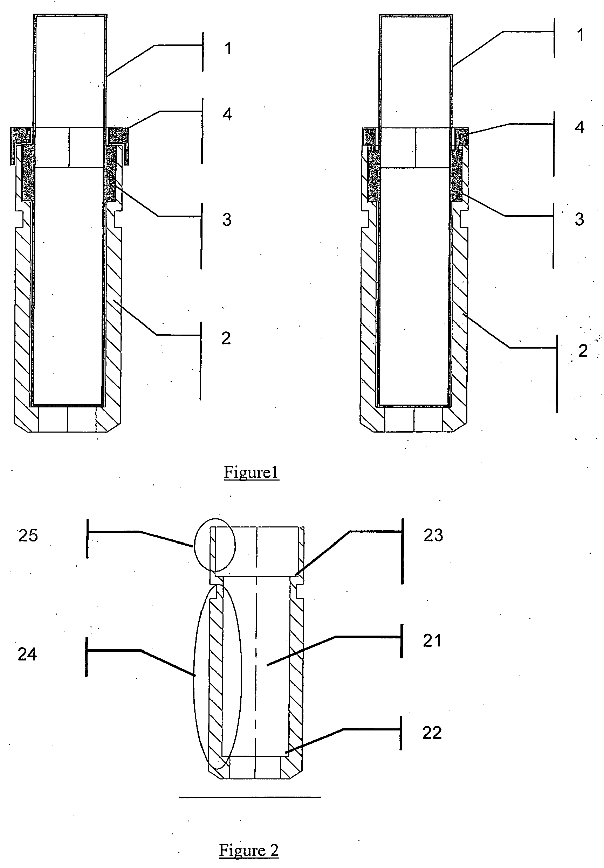

Une représentation de l'ensemble de joint d'étanchéité selon l'invention est représenté figure 1.

L'ensemble de joint d'étanchéité selon l'invention permet :
- de diminuer le taux de rebut en assurant, l'homogénéité de la répartition du matériau de scellement sur la circonférence de la membrane, ce qui évite les risques de fuites dans les zones pauvres en matériau de scellement.
- de limiter les contraintes mécaniques développées sur la membrane lors de l'élaboration du scellement et lors de l'utilisation de la membrane.
- d'améliorer les performances du scellement en formant une barrière entre le matériau de scellement et l'atmosphère environnante pour éviter son exposition directe aux gaz corrosifs.

Selon le cas, l'ensemble selon l'invention peut présenter une ou plusieurs des caractéristiques suivantes :
- ledit ensemble présente un premier jeu entre le tube céramique et la partie inférieure au deuxième épaulement 23 de la première bague 2, inférieure à 0,2 mm
- ledit ensemble présente un deuxième jeu entre le tube céramique 1 et la deuxième bague 3 inférieure à 0,1 mm
- le matériau de scellement de la deuxième bague 3 est choisi parmi les verres et les vitrocéramiques.
- les alliages de la première bague 2 et de la troisième bague 4 sont choisis parmi les alliages ayant une température d'utilisation supérieure à 500°C et un coefficient d'expansion thermique de la température ambiante à 800°C supérieur à 12.10⁻⁶ K⁻¹, comme par exemple les alliages Haynes ® 230, HR 120, 690, 601, 800 HT,...De préférence, la première bague 2 et la troisième bague 4 sont fabriqués dans le même alliage.
- la deuxième bague 3 comprend un épaulement 31 permettant de supporter la troisième bague (4).
- ledit ensemble présente un deuxième jeu entre le tube céramique 1 et la deuxième bague 3 inférieure à 0,2 mm.
- une partie 42 de la troisième bague 4 est située dans l'espace annulaire formé par le deuxième épaulement 23 de la première bague 2 en alliage réfractaire.

La première bague en alliage réfractaire permet d'assurer l'étanchéité, d'un côté avec la membrane céramique et de l'autre avec le réacteur. Elle est constituée de deux zones, la première est une liaison céramique métal qui fait l'objet de cette invention et la seconde est une liaison métal-métal qui assure l'étanchéité avec le réacteur par une technique connue de type joint de compression ou contact plan/plan.

Au niveau de la jonction céramique/métal, c'est-à-dire au niveau de la jonction avec le tube céramique, cette bague a deux fonctions (Figure 2) :
- le guidage et le support du tube céramique pour le maintenir le plus vertical possible, on parlera de zone de guidage 24 ; et
- la formation d'une interface étanche et stable entre l'alliage réfractaire qui la constitue et le matériau de scellement, on parlera de zone de scellement 25.

Le plan présenté à la figure 2 montre les deux épaulements, le premier sur lequel la membrane céramique vient se poser, le second servant de support au matériau de scellement. Le diamètre et la hauteur de cette bague sont ajustés aux dimensions de la membrane. Afin de limiter les coûts, on peut choisir de laisser les côtes de la première bague fixes malgré les légères variations dimensionnelles des membranes céramiques.

La deuxième bague en un matériau de scellement se déforme lors d'un traitement thermique à haute température pour la forcer à occuper l'ensemble du volume entre la membrane et la bague de liaison vers le réacteur. Par traitement thermique, on entend par exemple l'application d'une température de l'ordre de :
- 1150°C pour un matériau de scellement en vitro-céramique de type Macor®,
- 850°C pour un matériau de scellement en verre de type sodo calcique, ou
- 1100°C pour un matériau de scellement en verre chargé à 20%poids de particules de céramiques (Al₂O₃, ZrO₂, Perovskite,...)

La deuxième bague 3 utilisée dans le cadre de la présente invention peut présenter ou non un épaulement 31 destiné à supporter la troisième bague.

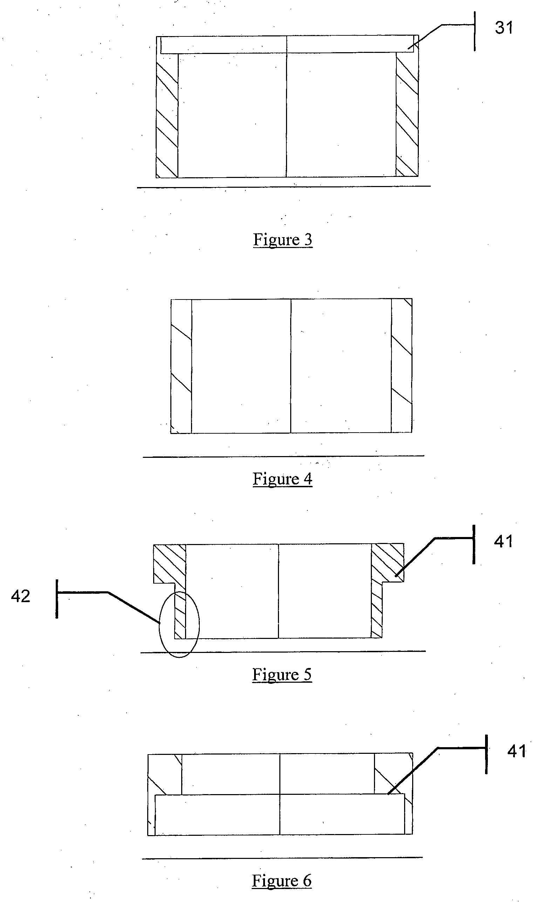

La figure 3 représente la deuxième bague avec l'épaulement 31 et la figure 4 représente la deuxième bague sans l'épaulement.

Dans le cas où la deuxième bague 3 présente un épaulement 31, celle-ci assure trois fonctions :
- le guidage et le centrage du tube céramique par rapport à la première bague avec le réacteur. Pour cela le jeu entre le diamètre externe du tube céramique et le diamètre interne de cette bague doit être inférieur à 0.2mm. Cela permet de maintenir le tube céramique vertical et d'assurer une bonne répartition du matériau de scellement sur la circonférence de la membrane. Le jeu avec la première bague vers le réacteur est inférieur à 0.1mm. La jonction entre la première bague et le réacteur peut être réalisée soit par soudure, soudage diffusion, brasure, joint métallique,....
- le centrage de la troisième bague qui permet également d'assurer une répartition homogène du matériau de scellement sur la circonférence de la membrane et augmente fortement la fiabilité et la reproductibilité du scellement.
- l'établissement d'interfaces étanches avec le tube céramique et la première bague avec le réacteur. Pour cela, les jeux entre ces pièces sont minimisés au maximum pour assurer un contact rapide et intime au niveau des interfaces lors de la déformation du matériau de scellement à haute température.

Le volume de la deuxième bague 3 est également un paramètre important. Il doit être ajusté en fonction du volume disponible lorsque tous les éléments ont atteint leur position finale (le matériau de scellement se déforme et la deuxième bague suit cette déformation). Cela permet d'éviter un débordement du matériau de scellement lorsqu'il est fluide. Le volume est ajusté en jouant sur la hauteur de la pièce.

On préférera sous estimer légèrement le volume de la deuxième bague pour éviter les risques cités ci-dessus tout en gardant à l'esprit que l'obtention de l'étanchéité nécessite suffisamment de matériau de scellement.

Lorsque la deuxième bague ne présente pas d'épaulement (figure 4), celle-ci n'assure plus que deux fonctions :
- le guidage et le centrage du tube céramique par rapport à la première bague avec le réacteur. Pour cela le jeu entre le diamètre externe du tube céramique et le diamètre interne de cette deuxième bague doit être inférieur à 0.1mm. Cela permet de maintenir le tube céramique vertical et d'assurer une bonne répartition du matériau de scellement sur la circonférence du tube céramique ; et
- l'établissement d'interfaces étanches avec le tube céramique et la première bague avec le réacteur. Pour cela, les jeux entre ces pièces sont minimisés au maximum pour assurer un contact rapide et intime au niveau des interfaces lors de la déformation du matériau de scellement à haute température.

La troisième bague est capitale pour l'obtention d'un scellement étanche, pour la reproductibilité et pour limiter les contraintes au niveau du tube céramique.

La troisième bague assure en effet quatre fonctions :
- assurer un étalement homogène du matériau de scellement sur la circonférence du tube céramique ;
- éviter le collage de la charge éventuelle placée sur le matériau de scellement lors de l'élaboration de la jonction pour que la déformation soit homogène ;
- limiter la charge appliquée sur la membrane une fois le scellement réalisé puisque cette bague vient se poser sur la première bague vers lé réacteur ; et
- protéger le matériau de scellement vis-à-vis de l'atmosphère environnante (résistance à la corrosion).

La troisième bague peut être choisie suivant une des deux formes suivantes.

La première forme est illustrée à la figure 5 et associée à la deuxième bague en matériau de scellement de la figure 3, autrement dit la deuxième bague 3 qui présente un épaulement 31. Le principe consiste à faire pénétrer la troisième bague dans le matériau de scellement pour le forcer à s'écouler vers les interfaces. La figure 5 montre la partie 42 qui pénètre dans le matériau de scellement. La hauteur de pénétration de la troisième bague dans le matériau de scellement doit être suffisante pour assurer un étalement homogène de ce dernier sans atteindre la hauteur complète de la zone de scellement. Elle conditionnera également le volume à combler pour le matériau de scellement, donc la hauteur de la deuxième bague de matériau de scellement.

La seconde forme est illustrée à la figure 6 et associée à la deuxième bague en matériau de scellement de la figure 4. Dans ce cas le volume à combler par le matériau de scellement est indépendant de la forme de la seconde bague, donc les dimensions de la deuxième bague en matériau de scellement sont indépendantes de celles de la troisième bague. Le guidage et le centrage de la troisième bague sont assurés par l'extérieur de la bague de liaison avec le réacteur, la deuxième bague en matériau de scellement a une forme plus simple que dans le système précédent.

Dans les deux cas, un épaulement 41 est réalisé pour former une barrière vis-à-vis de l'atmosphère environnante.

La présente invention a également pour objet un procédé d'élaboration de l'ensemble de joint d'étanchéité selon l'invention, comprenant les étapes successives suivantes :
a) on introduit le tube céramique 1 dans l'ouverture cylindrique 21 de la première bague 2 en alliage réfractaire ;
b) on introduit le matériau de scellement dans l'espace annulaire formé par le deuxième épaulement 23 de la première bague 2 en alliage réfractaire ;
c) on dépose la troisième bague 4 sur le bord supérieur de la deuxième bague 3; et
d) on applique un traitement thermique à l'ensemble des trois bagues 2, 3, et 4 et au tube céramique 1, à une température permettant au matériau de scellement de se déformer ;
e) on récupère un ensemble de joint d'étanchéité selon l'invention.

Lorsque le traitement thermique est appliqué, le matériau de scellement se déforme pour le forcer à occuper l'ensemble de l'espace annulaire formé par le deuxième épaulement 23 de la première bague 2 en alliage réfractaire et permettre à la troisième bague de venir se poser sur le bord supérieur se la première bague 2.

Dans le cas, où :
- la troisième bague 4 comprend un épaulement 41 permettant à la troisième bague 4 de se poser sur la première bague 2, et
- la deuxième bague présente un épaulement 23 et une partie de la troisième bague est située dans l'espace annulaire formé par le deuxième épaulement 23 de la bague en alliage réfractaire,
le procédé d'élaboration de l'ensemble de joint d'étanchéité comprend les étapes successives suivantes :
a) on introduit le tube céramique 1 dans l'ouverture cylindrique 21 de la première bague 2 en alliage réfractaire ;
b) on introduit le matériau de scellement dans l'espace annulaire formé par le deuxième épaulement 23 de la première bague 2 en alliage réfractaire;
c) on met en place la troisième bague 4 en introduisant une partie 42 dans l'espace annulaire formé par le deuxième épaulement 23 de la première bague 2 de manière à étaler le matériau de scellement dans l'espace annulaire et en posant l'épaulement de la troisième bague 4 sur le bord de la deuxième bague 3; et
d) on applique un traitement thermique à l'ensemble des trois bagues 2, 3, et 4 et au tube céramique 1, à une température permettant au matériau de scellement de se déformer ;
e) on récupère un ensemble de joint d'étanchéité selon l'invention.

Dans ce cas également, lorsque le traitement thermique est appliqué, le matériau de scellement se déforme pour le forcer à occuper l'ensemble de l'espace annulaire formé par le deuxième épaulement 23 de la première bague 2 en alliage réfractaire et permettre à la troisième bague de venir se poser sur le bord supérieur se la première bague 2.

Selon le cas, le procédé selon l'invention peut présenter une ou plusieurs des caractéristiques ci-dessous :
- avant ou pendant l'étape d) de traitement thermique, on applique une charge 71 sur la troisième bague 4;
- le traitement thermique est réalisé sous air ;
- le traitement thermique est réalisé au moyen d'un four.

Avant l'étape a) d'introduction du tube céramique, on peut ajouter une étape de préoxydation des bagues en alliage métallique. Il s'agit d'un traitement sous air à 950°C pendant 2h pour former une couche vitreuse en surface afin d'améliorer l'accrochage entre le matériau de scellement et la surface de l'alliage métallique.

La première bague 2 pourrait également être sablée avant l'étape a). Par « sablée », on entend une augmentation de la rugosité de la surface dans la zone qui est en contact avec le matériau de scellement, autrement dit au niveau de l'espace annulaire. Ceci afin d'améliorer l'adhésion du matériau de scellement sur la surface de l'alliage par accrochage mécanique du matériau de scellement dans la rugosité créée.

Notons que le traitement thermique pourrait être appliqué uniquement dans la zone du matériau de scellement.

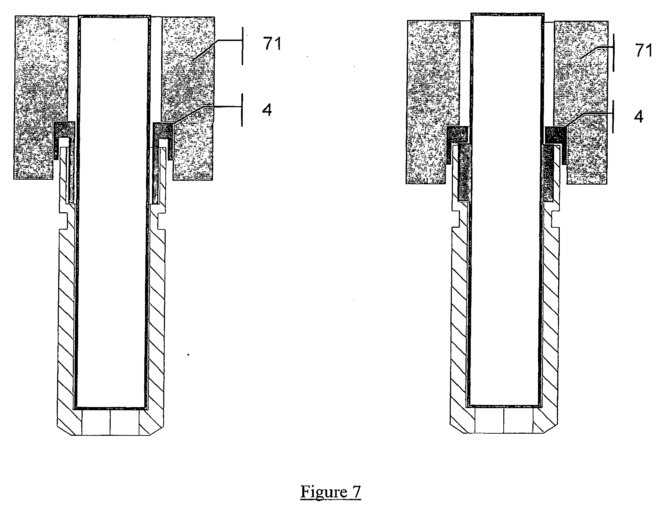

L'application d'une charge sur la troisième bague permet d'assurer une déformation homogène sur la circonférence de la membrane. Cette charge peut être appliquée de plusieurs manières :
- la plus simple consiste à poser une pièce massive sur la troisième bague 4 (figure 7). Malgré sa simplicité, cette technique permet de ne pas appliquer de contrainte directement sur le tube céramique 1, ce qui pourrait l'endommager. En effet la charge repose initialement uniquement sur la troisième bague 4 et la deuxième bague en un matériau de scellement 3 (partie gauche de la figure 7). Lors du traitement thermique la déformation du matériau de scellement conduit la troisième bague à se poser sur l'épaulement de la première bague 2 avec le réacteur (partie droite de la figure 7). Au refroidissement, la charge est donc appliquée sur la première bague 2 vers le réacteur via la troisième bague 4. A aucun moment du procédé, la charge n'est appliquée de manière directe ou indirecte sur le tube céramique 1. Ceci permet d'éviter tout endommagement du tube céramique lors de l'étape de scellement.
- une autre solution serait de disposer d'une presse dans le four pour appliquer la charge au moment souhaité lors du scellement. Cette approche techniquement possible met en oeuvre des moyens plus onéreux que la première solution.

Le traitement thermique utilisé pour obtenir la déformation du matériau de scellement doit être ajusté en fonction de ce dernier. Pour ce type d'application, les meilleurs candidats pour le matériau de scellement sont les verres et les vitrocéramiques. Il convient donc de connaître leur propriété d'étalement (viscosité en fonction de la température) pour ajuster la température maximale du traitement, la durée de palier nécessaire à cette température et les vitesses de refroidissement et paliers nécessaires au refroidissement pour limiter les contraintes lors de cette étape.

L'ensemble de joint d'étanchéité selon l'invention sera utilisée de préférence au sein d'un réacteur à base de membrane céramique pour la production ou la séparation de gaz, de préférence pour la production de gaz de synthèse ou pour la production d'électricité par l'oxycombustion de charbon.

## Revendications

1. Ensemble de joint d'étanchéité qui comprend :
(a) un tube céramique (1)
(b) une première bague (2) en alliage réfractaire comprenant :
- une ouverture cylindrique (21) permettant de recevoir le tube céramique ;
- un premier épaulement (22) situé à l'extrémité inférieure de la bague, orienté vers l'intérieur de l'ouverture cylindrique et permettant de supporter ledit tube céramique
- un deuxième épaulement (23) formant un espacé annulaire, à l'extrémité supérieure de la bague, entre le tube céramique et la première bague en alliage réfractaire ;
(c) une deuxième bague (3) en un matériau de scellement déformable par traitement thermique située dans l'espace annulaire formé par le deuxième épaulement de la bague en alliage réfractaire ; et **caractérisé par**
(d) une troisième bague (4) en alliage métallique posée sur le bord supérieur de la première bague (2).

2. Ensemble selon la revendication 1, **caractérisé en ce que** ledit ensemble présente un premier jeu entre le tube céramique et la partie inférieure au deuxième épaulement (23) de la première bague (2), inférieure à 0,2 mm

3. Ensemble selon l'une des revendications 1 ou 2, **caractérisé en ce que** ledit ensemble présente un deuxième jeu entre le tube céramique (1) et la deuxième bague (3) inférieure à 0,1 mm

4. Ensemble selon l'une des revendications 1 à 3, **caractérisé en ce que** le matériau de scellement de la deuxième bague (3) est choisi parmi les verres et les vitrocéramiques.

5. Ensemble selon l'une des revendications 1 à 4, **caractérisé en ce que** les alliages de la première bague (2) et de la troisième bague (4) sont choisis parmi les alliages ayant une température d'utilisation supérieure à 500°C et un coefficient d'expansion thermique de la température ambiante à 800°C supérieur à 12.10⁻⁶ K⁻¹.

6. Ensemble selon l'une des revendications 1 à 5, **caractérisé en ce que** la deuxième bague (3) comprend un épaulement (31) permettant de supporter la troisième bague (4).

7. Ensemble selon la revendication 6, **caractérisé en ce que** ledit ensemble présente un deuxième jeu entre le tube céramique (1) et la deuxième bague (3) inférieure à 0,2 mm.

8. Ensemble selon l'une des revendications 6 ou 7, **caractérisé en ce que** la troisième. bague (4) comprend un épaulement (41) permettant à la troisième bague (4) de se poser sur la première bague (2).

9. Ensemble selon la revendication 8, **caractérisé en ce qu'**une partie (42) de la troisième bague (4) est située dans l'espace annulaire formé par le deuxième épaulement (23) de la première bague (2) en alliage réfractaire.

10. Procédé d'élaboration de l'ensemble de joint d'étanchéité selon l'une des revendications 1 à 5, comprenant les étapes successives suivantes :
a) on introduit le tube céramique (1) dans l'ouverture cylindrique (21) de la première bague (2) en alliage réfractaire ;
b) on introduit le matériau de scellement dans l'espace annulaire formé par le deuxième épaulement (23) de la première bague (2) en alliage réfractaire ;
c) on dépose la troisième bague (4) sur le bord supérieur de la deuxième bague (3); et
d) on applique un traitement thermique à l'ensemble des trois bagues (2), (3), et (4) et au tube céramique (1), à une température permettant au matériau de scellement de se déformer ;
e) on récupère un ensemble de joint d'étanchéité selon l'une des revendications 1 à 5.

11. Procédé d'élaboration de l'ensemble de joint d'étanchéité selon la revendication 9, comprenant les étapes successives suivantes :
a) on introduit le tube céramique (1) dans l'ouverture cylindrique (21) de la première bague (2) en alliage réfractaire ;
b) on introduit le matériau de scellement dans l'espace annulaire formé par le deuxième épaulement (23) de la première bague (2) en alliage réfractaire;
c) on met en place la troisième bague (4) en introduisant une partie (42) dans l'espace annulaire formé par le deuxième épaulement (23) de la première bague (2) de manière à étaler le matériau de scellement dans l'espace annulaire et en posant l'épaulement de la troisième bague (4) sur le bord de la deuxième bague (3); et
d) on applique un traitement thermique à l'ensemble des trois bagues (2), (3), et (4) et au tube céramique (1), à une température permettant au matériau de scellement de se déformer ;
e) on récupère un ensemble de joint d'étanchéité selon la revendication 9.

12. Procédé d'élaboration selon l'une des revendications 10 ou 11, **caractérisé en ce qu'**avant ou pendant l'étape d) de traitement thermique, on applique une charge (71) sur la troisième bague (4).

13. Procédé d'élaboration selon l'une des revendications 10 à 12, **caractérisé en ce que** le traitement thermique est réalisé sous air.

14. Procédé d'élaboration selon l'une des revendications 10 à 13, **caractérisé en ce que** le traitement thermique est réalisé au moyen d'un four.

15. Utilisation d'un ensemble selon l'une des revendications 1 à 9 au sein d'un réacteur à base de membrane céramique pour la production ou la séparation de gaz, de préférence pour la production de gaz de synthèse.

16. Utilisation d'un ensemble selon l'une des revendications 1 à 9 au sein d'un réacteur à base de membrane céramique pour la production d'électricité par l'oxycombustion de charbon.

## Patentansprüche

1. Dichtungseinheit, die Folgendes umfasst:
(a) ein keramisches Rohr (1)
(b) einen ersten Ring (2) aus einer feuerfesten Legierung, umfassend:
- eine zylindrische Öffnung (21), die ermöglicht, das keramische Rohr aufzunehmen;
- einen ersten Absatz (22), der sich am unteren Ende des Rings befindet, der zum Inneren der zylindrischen Öffnung ausgerichtet ist und ermöglicht, das keramische Rohr zu tragen
- einen zweiten Absatz (23), der einen ringförmigen Raum bildet, am oberen Ende des Rings, zwischen dem keramischen Rohr und dem ersten Ring aus einer feuerfesten Legierung
(c) einen zweiten Ring (3) aus einem Versiegelungsmaterial, das durch Wärmebehandlung verformbar ist, das sich im ringförmigen Raum befindet, der durch den zweiten Absatz des Rings aus einer feuerfesten Legierung gebildet ist; und **gekennzeichnet durch**
(d) einen dritten Ring (4) aus einer metallischen Legierung, der auf dem oberen Rand des ersten Rings (2) angeordnet ist.

2. Einheit nach Anspruch 1, **dadurch gekennzeichnet, dass** die Einheit ein erstes Spiel zwischen dem keramischen Rohr und dem unteren Teil zum zweiten Absatz (23) des ersten Rings (2) von weniger als 0,2 mm aufweist.

3. Einheit nach einem der Ansprüche 1 oder 2, **dadurch gekennzeichnet, dass** die Einheit ein zweites Spiel zwischen dem keramischen Rohr (1) und dem zweiten Ring (3) von weniger als 0,1 mm aufweist.

4. Einheit nach einem der Ansprüche 1 bis 3, **dadurch gekennzeichnet, dass** das Versiegelungsmaterial des zweiten Rings (3) ausgewählt ist aus Gläsern und Glaskeramiken.

5. Einheit nach einem der Ansprüche 1 bis 4, **dadurch gekennzeichnet, dass** die Legierungen des ersten Rings (2) und des dritten Rings (4) ausgewählt sind aus den Legierungen mit einer Verwendungstemperatur von mehr als 500 °C und einem thermischen Ausdehnungskoeffizienten der Umgebungstemperatur bei 800 °C von mehr als 12.10⁻⁶ K⁻¹.

6. Einheit nach einem der Ansprüche 1 bis 5, **dadurch gekennzeichnet, dass** der zweite Ring (3) einen Absatz (31) umfasst, der ermöglicht, den dritten Ring (4) zu tragen.

7. Einheit nach Anspruch 6, **dadurch gekennzeichnet, dass** die Einheit ein zweites Spiel zwischen dem keramischen Rohr (1) und dem zweiten Ring (3) von weniger als 0,2 mm aufweist.

8. Einheit nach einem der Ansprüche 6 oder 7, **dadurch gekennzeichnet, dass** der dritte Ring (4) einen Absatz (41) umfasst, der ermöglicht, dass sich der dritte Ring (4) auf dem ersten Ring (2) anordnet.

9. Einheit nach Anspruch 8, **dadurch gekennzeichnet, dass** sich ein Teil (42) des dritten Rings (4) im ringförmigen Raum befindet, der vom zweiten Absatz (23) des ersten Rings (2) aus einer feuerfesten Legierung gebildet ist.

10. Verfahren zur Erstellung der Dichtungseinheit nach einem der Ansprüche 1 bis 5, umfassend die folgenden aufeinander folgenden Schritte:
a) Einführen des keramischen Rohrs (1) in die zylindrische Öffnung (21) des ersten Rings (2) aus einer feuerfesten Legierung;
b) Einführen des Versiegelungsmaterials in den ringförmigen Raum, der vom zweiten Absatz (23) des ersten Rings (2) aus einer feuerfesten Legierung gebildet ist;
c) Ablegen des dritten Rings (4) auf dem oberen Rand des zweiten Rings (3); und
d) Anwenden einer thermischen Behandlung auf die Einheit der drei Ringe (2), (3) und (4) und auf das keramische Rohr (1) bei einer Temperatur, die dem Versiegelungsmaterial ermöglicht, sich zu verformen;
e) Wiedergewinnen einer Dichtungseinheit nach einem der Ansprüche 1 bis 5.

11. Verfahren zur Erstellung der Dichtungseinheit nach Anspruch 9, umfassend die folgenden aufeinander folgenden Schritte:
a) Einführen des keramischen Rohrs (1) in die zylindrische Öffnung (21) des ersten Rings (2) aus einer feuerfesten Legierung;
b) Einführen des Versiegelungsmaterials in den ringförmigen Raum, der vom zweiten Absatz (23) des ersten Rings (2) aus einer feuerfesten Legierung gebildet ist;
c) Anbringen des dritten Rings (4) durch Einführen eines Teils (42) in den ringförmigen Raum, der vom zweiten Absatz (23) des ersten Rings (2) gebildet ist, um das Versiegelungsmaterial im ringförmigen Raum zu verteilen, und durch Anordnen des Absatzes des dritten Rings (4) auf dem Rand des zweiten Rings (3); und
d) Anwenden einer thermischen Behandlung auf die Einheit der drei Ringe (2), (3) und (4) und auf das keramische Rohr (1) bei einer Temperatur, die dem Versiegelungsmaterial ermöglicht, sich zu verformen;
e) Wiedergewinnen einer Dichtungseinheit nach Anspruch 9.

12. Verfahren nach einem der Ansprüche 10 oder 11, **dadurch gekennzeichnet, dass** vor oder während Schritt d) des thermischen Behandelns eine Ladung (71) auf den dritten Ring (4) angewendet wird.

13. Verfahren nach einem der Ansprüche 10 bis 12, **dadurch gekennzeichnet, dass** die thermische Behandlung unter Luft durchgeführt wird.

14. Verfahren nach einem der Ansprüche 10 bis 13, **dadurch gekennzeichnet, dass** die thermische Behandlung mit Hilfe eines Ofens durchgeführt wird.

15. Verwendung einer Einheit nach einem der Ansprüche 1 bis 9 in einem Reaktor auf der Grundlage einer keramischen Membran zur Produktion oder Trennung von Gas, vorzugsweise zur Produktion von Synthesegas.

16. Verwendung einer Einheit nach einem der Ansprüche 1 bis 9 in einem Reaktor auf der Grundlage einer keramischen Membran zur Produktion von Elektrizität durch Sauerstoffverbrennung von Kohle.

## Claims

1. Seal assembly comprising:
(a) a ceramic tube (1)
(b) a first ring (2) made from a refractory alloy comprising:
- a cylindrical opening (21) designed to receive the ceramic tube;
- a first shoulder (22) located at the lower end of the ring, directed towards the inside of the cylindrical opening and designed to support said ceramic tube;
- a second shoulder (23) forming a ring-shaped space at the upper end of the ring, between the ceramic tube and the first ring made from a refractory alloy;
(c) a second ring (3) made from a sealing material that can be deformed by heat treatment, located in the ring-shaped space formed by the second shoulder of the ring made from a refractory alloy; and **characterised by**
(d) a third ring (4) made from a metal alloy positioned on the upper edge of the first ring (2).

2. Assembly according to claim 1, **characterised in that** said assembly has a first clearance between the ceramic tube and the portion below the second shoulder (23) of the first ring (2), of less than 0.2 mm.

3. Assembly according to one of claims 1 or 2, **characterised in that** said assembly has a second clearance between the ceramic tube (1) and the second ring (3) of less than 0.1 mm.

4. Assembly according to one of claims 1 to 3, **characterised in that** the sealing material of the second ring (3) is chosen from glass and glass-ceramic materials.

5. Assembly according to one of claims 1 to 4, **characterised in that** the alloys of the first ring (2) and of the third ring (4) are chosen from alloys having a working temperature greater than 500°C and a coefficient of thermal expansion from ambient temperature to 800°C of greater than 12.10⁻⁶ K⁻¹.

6. Assembly according to one of claims 1 to 5, **characterised in that** the second ring (3) comprises a shoulder (31) designed to support the third ring (4).

7. Assembly according to claim 6, **characterised in that** said assembly has a second clearance between the ceramic tube (1) and the second ring (3) of less than 0.2 mm.

8. Assembly according to one of claims 6 or 7, **characterised in that** the third ring (4) comprises a shoulder (41) enabling the third ring (4) to be positioned on the first ring (2).

9. Assembly according to claim 8, **characterised in that** a portion (42) of the third ring (4) is located in the ring-shaped space formed by the second shoulder (23) of the first ring (2) made from a refractory alloy.

10. Production method for producing the seal assembly according to one of claims 1 to 5, comprising the following successive steps:
a) the ceramic tube (1) is inserted into the cylindrical opening (21) of the first ring (2) made from a refractory alloy;
b) the sealing material is inserted into the ring-shaped space formed by the second shoulder (23) of the first ring (2) made from a refractory alloy;
c) the third ring (4) is placed on the upper edge of the second ring (3); and
d) a heat treatment is applied to all three rings (2), (3) and (4) and to the ceramic tube (1), at a temperature that enables the sealing material to be deformed;
e) a seal assembly according to one of claims 1 to 5 is produced.

11. Production method for producing the seal assembly according to claim 9, comprising the following successive steps:
a) the ceramic tube (1) is inserted into the cylindrical opening (21) of the first ring (2) made from a refractory alloy;
b) the sealing material is inserted into the ring-shaped space formed by the second shoulder (23) of the first ring (2) made from a refractory alloy;
c) the third ring (4) is positioned by inserting one portion (42) into the ring-shaped space formed by the second shoulder (23) of the first ring (2) so as to spread the sealing material in the ring-shaped space and by positioning the shoulder of the third ring (4) on the edge of the second ring (3); and
d) a heat treatment is applied to all three rings (2), (3) and (4) and to the ceramic tube (1), at a temperature that enables the sealing material to be deformed;
e) a seal assembly according to claim 9 is produced.

12. Production method according to one of claims 10 or 11, **characterised in that** before or during the heat treatment step d), a load (71) is applied to the third ring (4).

13. Production method according to one of claims 10 to 12, **characterised in that** the heat treatment is carried out in air.

14. Production method according to one of claims 10 to 13, **characterised in that** the heat treatment is carried out using a furnace.

15. Use of an assembly according to one of claims 1 to 9 within a ceramic membrane reactor for the production or separation of gas, preferably for the production of syngas.

16. Use of an assembly according to one of claims 1 to 9 within a ceramic membrane reactor for electricity generation by oxy-fuel coal combustion.
